(19) **Europäisches Patentamt**

**European Patent Office**

**Office européen des brevets**

(11) **EP 1 484 700 A1**

(12) **EUROPEAN PATENT APPLICATION**

(43) Date of publication:
**08.12.2004 Bulletin 2004/50**

(51) Int Cl.⁷: $G06F\ 17/60$

(21) Application number: **03253455.4**

(22) Date of filing: **02.06.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Akzo Nobel N.V.**
**6824 BM Arnhem (NL)**

(72) Inventors:
• **O'Leary, Clive William**
  **Medomsley, Durham, DH8 6TZ (GB)**

• **Anderson, Colin Dugeon**
  **Newcastle-upon-Tyne, NE2 3NS (GB)**

(74) Representative: **Schalkwijk, Pieter Cornelis et al**
**Akzo Nobel N.V.**
**Intellectual Property Department**
**P.O. Box 9300**
**6800 SB Arnhem (NL)**

(54) **Method for determining the costs associated with a foul release or antifouling coating composition during the in service period of a vessel**

(57)    This invention relates to a method for determining the costs associated with the application and use of a foul release or antifouling coating composition on the underwater section of a vessel. This method, using a computer, takes into account the differences between coatings with respect to fouling growth and surface roughness during the service life of such coatings.

**EP 1 484 700 A1**

**Description**

This invention relates to a method for determining the costs associated with the application and use of a foul release or antifouling coating composition on the underwater section of a vessel.

Man-made structures such as boat hulls, buoys, drilling platforms, oil production rigs and pipes which are immersed in water are prone to fouling by aquatic organisms such as green and brown algae, barnacles, mussels and the like. Marine structures are commonly of metal, but may also comprise other structural materials such as concrete. For smaller boats, the hulls may instead comprise, for example, wood or a fibre-reinforced resin. This fouling is a nuisance on boat hulls, because it increases the frictional resistance towards movement through the water, with the consequence of reduced speeds and increased fuel costs.

Many successful antifouling paints in recent years have been "self-polishing copolymer" paints based on a polymeric binder to which biocidal tri-organotin moieties are chemically bound and from which the biocidal moieties are gradually hydrolyzed by seawater, as described for example in GB-A-1457590. Self-polishing copolymer paints which release non-biocidal moieties are described in EP-A-69559, EP-A-204456, EP-A-529693, EP-A-779304, WO-A-91/14743, WO-A-91/09915, GB-A-231070 and JP-A-9-286933. Also so-called hybrid systems, comprising a self-polishing polymer and a solubilizing agent such as rosin, are used nowadays. Such hybrid systems are described in WO 00/43460.

It has been known for many years, for example, as disclosed in GB 1 307 001 and US 3 702 778 that silicone rubber coatings resist fouling by aquatic organisms. Such coatings present a surface to which the organisms cannot easily adhere, and they can accordingly be called foul release rather than antifouling coatings. Silicone rubbers and silicone compounds generally have very low toxic properties. It can be difficult to make them adhere well to the substrate surface that is to be protected, and they can be mechanically rather weak and liable to damage. However, improved systems are known, such as those described in WO 99/33927.

Most antifouling and foul release coatings have a limited service life. Normally, the service life of this type of coatings up to 5 years. After this period a fresh layer of antifouling or foul release coating has to be applied to the underwater section of the vessel.

The present application relates to a method for determining the costs associated with the application and use of a foul release or antifouling coating composition on the underwater section of a vessel. This method can be used for calculating these costs for newly built vessels, but can also be used for calculating these costs when an old layer is replaced by a fresh layer.

The method according to the present invention using a computer system comprises the following steps:

a) loading or storing in a memory or a storage medium of the computer system a first set of data relating to the vessel type and fuel consumption of said vessel type;

b) loading or storing in a memory or a storage medium of the computer system a second set of data relating to the cost of fuel, the days at sea of said vessel and the in-service period of said vessel;

c) loading or storing in a memory or a storage medium of the computer system a third set of data relating to the costs of application of said foul release or antifouling coating composition to said underwater section of said vessel;

d) calculating and storing in a memory or a storage medium of the computer system a forth set of data indicating the fuel costs for said vessel type during said in-service period, wherein for the calculation of these fuel costs additional fuel costs associated with an increase of roughness of said coating or fouling growth is not taken into account;

e) calculating and storing in a memory or a storage medium of the computer a fifth set of data indicating the additional fuel costs for the increase of roughness of said foul release or antifouling coating during said in-service period;

f) calculating and storing in a memory or a storage medium of the computer a sixth set of data indicating the additional fuel costs associated with the fouling growth during said in-service period;

g) calculating and storing in a memory or a storage medium of the computer the total costs on basis of the third set of data, the forth set of data, the fifth set of data, and the sixth set of data.

These data and steps will be explained in more detail below

Data on vessel type

Data on the vessel type, including its dimensions, in particular the dimensions of the underwater part of the vessel, are important to calculate the friction resistance on the vessel when it travels through the water at a certain speed.

Data on fuel consumption

For most vessel types data are available for their fuel consumption. Normally these data are based upon a relatively smooth underwater area, i.e. an underwater area with little or no fouling. There is a difference between the fuel consumption for a vessel with and without cargo. When the precise time spent loaded or ballasted is not known, it is assumed that one half of its time the vessel travels at sea with a full load, and for the other half the vessel is empty.

Data on cost of fuel

Normally this is a fixed number, but it is also possible to take into account fluctuations in the price of the fuel during the in-service period.

Data on days at sea of said vessel

For the present model only the days at sea are relevant for calculating the fuel consumption of a vessel.

Data on in-service period

The in-service period is the time the vessel is immersed in water between the application of the foul release or antifouling coating composition on the underwater section of the vessel until this coating has to be replaced by a new layer.

Data on the costs of application of the foul release or antifouling coating composition to the underwater section of the vessel;

The costs of application of the coating mainly depend on:

i      the area of the underwater area of the vessel;
ii     the type of coating that is used;
iii    optionally, the costs associated with putting the vessel in a dry dock;
Ad i   The larger the underwater area of the vessel, the larger amount of coating will be used to protect this. This is closely related to ii.
Ad ii  The type of coating system that is used has a significant influence on the cost of application. In general, the coating system comprises several layers, e.g. a primer and topcoat, but also 3 or more layer systems are known. If the coating is applied on top of an existing coating, it might be necessary to apply a tie coat to improve the adhesion between the different coating layers.
Further, the type of coating has an influence on the costs. In general a foul release coating is more expensive than an antifouling coating in view of the ingredients that are used in a coating. Examples of coatings that can be used are:

Intersleek 700 (ex. International Coatings Ltd.) is a foul release coating system;
Intersmooth Ecoloflex SPC (ex. International Coatings Ltd.) is a TBT-free self polishing copolymer antifouling coating;
Interswift 655 (ex. International Coatings Ltd.) is a hybrid TBT-free self polishing copolymer antifouling coating;
Interspeed 340 (ex. International Coatings Ltd.) is a TBT-free controlled depletion polymer (CDP) self polishing antifouling coating;
As a rule of thumb it can be said that the costs of application for these different coating types increases as follows:
Interspeed < Interswift < Intersmooth < Intersleek

Ad iii  Costs associated by putting a vessel in a dry dock should not only include the costs charged by the dry dock owner, but also the loss of income since the vessel is not able to transport any cargo while in dock. For a proper use of the method according to the present invention it is not necessary to include these dry-docking costs and/or the off-hire costs into account.

Calculation of the fuel costs during the in-service period, wherein for the calculation of these fuel costs additional fuel costs associated with an increase of roughness of the coating or fouling growth is not taken into account;

Normally this is a straight forward calculation based upon the characteristics of the vessel. Often, also data from actual practice can be used. However, as indicated above, it should be taken into account that there is a difference between fuel consumption for a vessel with and without cargo. When the precise time spent loaded or ballasted is not known, it is assumed that one half of its time the vessel travels at sea with a full load, and for the other half the vessel is empty.

Calculation of the additional fuel costs for the increase of roughness during said in-service period;

It was found that during the in-service period, the roughness of the coating layer increases, due to (small) damages to the hull of the vessel. This increase in roughness was found to differ markedly depending on which antifouling or foul release coating type was used. For example, for a CDP self polishing antifouling coating the increase in roughness is approximately 40 $\mu$m/year, for a SPC coating approximately 20 $\mu$m/year (see also Townsin et al. In "Fuel Economy due to Improvements in Ship Hull Surface Condition 1976-1986", International Shipbuilding Progress, 33, (383), 1986). The effect of the increased surface roughness on the fuel consumption (at constant speed) can be calculated using the so-called Townsin formulae (32nd WEGEMT School, University of Plymouth, 10-14 July, 2000), which take into account the change in frictional resistance of the ship, which is influenced by the sea water density, the wetted surface of the vessel, the speed of the vessel, the length of the vessel and the shape of the vessel.
To calculate the fuel consumption due to the increased surface roughness in a certain period of time requires to combine the results of the increase of surface roughness for the type of coating used and the Towsin formulae. The outcome is based upon an integration of the results from the Towsin formulae.

Using these formulae it can be calculated that for a CDP self polishing antifouling coating the increase in roughness of the vertical sides and the flat bottom of the vessel will result after 5 years service life in a 5,5% higher fuel consumption, for a hybrid coating for the same period in a 4,4% higher fuel consumption, for a SPC coating in a 3,7% higher fuel consumption, and for a foul release coating in a 0,9% higher fuel consumption.

In the above it is assumed that the vessel travels at constant speed, so an increase in surface roughness results in an increase in fuel consumption. However, it is also possible to base the calculation on a constant fuel consumption. However, in view of the increase of surface roughness, the speed of the vessel will decrease, leading to a longer time to travel from one point to the other. Normally additional costs (penalties etc.) are associated with such longer travel time, so these additional costs should be taken into account when determining the additional cost for the increase of surface roughness when the vessel travels at a constant fuel consumption.

Calculation of the additional fuel costs associated with the fouling growth during the in-service period;

By inspecting, monitoring, and analysing periodically the underwater section of a vessel the effect of fouling growth can be calculated. For example, such inspection can be carried out when the vessel is put in dry dock for maintenance. The results of such inspection can be stored in an electronic database. By statistical analysis of the data in such database, the average extent of fouling for a large variety of vessel types can be determined in this way on a scale from 0 - 100, where 0 = no fouling and 100 = complete fouling. Normally, different values are found for the vertical sides and for the flat bottom of a vessel. The data in such database can also be used to analyse the effect of fouling on the fuel consumption of different vessel types. Based on such analysis it can be said that complete fouling of the vertical sides will result in a 10% higher fuel consumption. An example of such database with a large amount of data based on inspections is the Dataplan database maintained and supported by International Coatings Ltd.

In particular when the service life is longer than the specified period for the antifouling coating, fouling growth will be observed. Normally, a CDP self polishing antifouling coating can stop fouling growth for a period of at maximum 3 years, hybrid self polishing antifouling coating can stop fouling growth for a period of at maximum 3 years on the vertical sides and 5 years on the flat bottom.

To calculate the fuel consumption due to fouling growth in a certain period of time requires to combine the results of the increase of fouling for the type of coating used and the additional fuel consumption associated with the level of fouling. The outcome is based upon an integration of the results.

Normally, the fuel increase due to the fouling and increase of roughness of the flat bottom of the vessel is less than the increase due to the fouling and roughness increase of the vertical sides.

In the above it is assumed that the vessel travels at constant speed, so fouling growth results in an increase in fuel consumption. However, it is also possible to base the calculation on a constant fuel consumption. However, in view of fouling growth, the speed of the vessel will decrease, leading to a longer time to travel from one point to the other. Normally additional costs (penalties etc.) are associated with such longer travel time, so these additional costs should be taken into account when determining the additional cost for the fouling growth when the vessel travels at a constant fuel consumption.

Calculation of the total costs.

The total costs are calculated by adding:

- the costs of application of the foul release or antifouling coating composition to the underwater section of the vessel,
- the fuel costs during the in-service period, wherein for the calculation of these fuel costs additional fuel costs associated with an increase of roughness of the coating or fouling growth is not taken into account;
- the additional fuel costs for the increase of roughness of the foul release or antifouling coating during the in-service period, and
- the additional fuel costs associated with the fouling growth during the in-service period.

The calculation of the total costs is a complex problem, in particular since the surface roughness of the antifouling or foul release coating layer is not constant in time and since the level of fouling also changes in time. The method according to the present invention breaks down this complex calculation in sequential steps, wherein two steps require a complex integration that can only be solved by using a computer system For CDP self polishing antifouling coating the increase in roughness and fouling growth will result after 3 years service life in a 10,0% higher fuel consumption on the vertical sides. For a hybrid self polishing antifouling coating the increase in roughness and fouling growth will result after 5 years service life in a 10,0% higher fuel consumption on the vertical sides. For a SPC coating and a foul release coating these percentages are 4,8% and 1,4% , respectively after 5 years service life.

In another embodiment, the present invention also relates to a method to determine the difference in fuel consumption during the in-service period for one vessel associated with the use of different types of antifouling or foul release coating.

This method using a computer system comprises the following steps

a) loading or storing in a memory or a storage medium of the computer system a first set of data relating to the vessel type and fuel consumption of said vessel type;

b) loading or storing in a memory or a storage medium of the computer system a second set of data relating to the cost of fuel, the days at sea of said vessel and the in-service period of said vessel;

c) loading or calculating or storing in a memory or a storage medium of the computer system a third set of data relating the increase of surface roughness and fouling growth for one type of antifouling or foul release coating during the in-service period of said vessel;

d) loading or calculating or storing in a memory or a storage medium of the computer system a fourth set of data relating the increase of surface roughness and fouling growth for the other type of antifouling or foul release coating during the in-service period of said vessel;

e) calculating and storing in a memory or a storage medium of the computer system a fifth set of data indicating the total fuel consumption for said vessel type coated with one type of antifouling or foul release coating during said in-service period, thereby taking into account the additional fuel consumption associated with an increase of roughness of said one type of coating and fouling growth on said one type of coating;

f) calculating and storing in a memory or a storage medium of the computer system a sixth set of data indicating the total fuel consumption for said vessel type coated with the other type of antifouling or foul release coating during said in-service period, thereby taking into account the additional fuel consumption associated with an increase of roughness of said other type of coating and fouling growth on said other type of coating;

g) calculating and storing in a memory or a storage medium of the computer the difference in fuel consumption which equals the difference between said fifth and sixth set of data.

In a further embodiment, the present invention also relates to a method to determine the cost difference during the in-service period for one vessel associated with the use of two different types of antifouling or foul release coating.

This method using a computer system comprises the following steps

a) loading or storing in a memory or a storage medium of the computer system a first set of data relating to the vessel type and fuel consumption of said vessel type;

b) loading or storing in a memory or a storage medium of the computer system a second set of data relating to the cost of fuel, the days at sea of said vessel and the in-service period of said vessel;

c) loading or calculating or storing in a memory or a storage medium of the computer system a third set of data relating the increase of surface roughness and fouling growth for one type of antifouling or foul release coating during the in-service period of said vessel;

d) loading or storing in a memory or a storage medium of the computer system a fourth set of data relating to the cost of application of said one type of antifouling or foul release coating to the underwater section of said vessel;

e) loading or calculating or storing in a memory or a storage medium of the computer system a fifth set of data relating the increase of surface roughness and fouling growth for the other type of antifouling or foul release coating during the in-service period of said vessel;

f) loading or storing in a memory or a storage medium of the computer system a sixth set of data relating to the cost of application of said other type of antifouling or foul release coating to the underwater section of said vessel;

g) calculating and storing in a memory or a storage medium of the computer system a seventh set of data indicating the total fuel costs for said vessel type coated with one type of antifouling or foul release coating during said in-service period, thereby taking into account the additional fuel consumption associated with an increase of roughness of said one type of coating and fouling growth on said one type of coating;

h) calculating and storing in a memory or a storage medium of the computer system a eighth set of data indicating the total fuel costs for said vessel type coated with the other type of antifouling or foul release coating during said in-service period, thereby taking into account the additional fuel consumption associated with an increase of roughness of said other type of coating and fouling growth on said other type of coating;

i) calculating and storing in a memory or a storage medium of the computer a ninth set of data indicating the difference in fuel costs between said seventh and eighth set of data;

j) calculating and storing in a memory or a storage medium of the computer a tenth set of data indicating the difference in coating application costs between said fourth and sixth set of data;

k) calculating and storing in a memory or a storage medium of the computer the cost difference which equals the sum of the costs from said ninth and tenth set of data.

Since the above methods allows for the determination of the increase of fuel consumption due to fouling growth and increase of surface roughness, it also allows to calculate the extra amount of $SO_x$, $NO_x$, and $CO_2$ emissions to the atmosphere related to the increased fuel consumption, since $SO_x$, $NO_x$, and $CO_2$ are given off when fuel is burnt.

Townsin formulae (32nd WEGEMT School on Marine Coatings, 10-14 July, 2000, University of Plymouth, UK)

For the calculation of the additional fuel costs relating to the increase of roughness of the foul release or antifouling coating the following formulae developed by Dr. R.L. Townsin can be used.

**Fractional added resistance ($\Delta R/R$) for going from a smooth ($k_1$) to a rough ($k_2$) surface:**

$$\Delta R/R = \Delta C_F/C_T = 0,044[(k_2/L)^{1/3} - (k_1/L)^{1/3}]/C_T,$$

wherein:

    $C_F$ = frictional resistance coefficient
    $C_T$ = total resistance coefficient = [Total Resistance/ $(0,5\ \rho\ S\ V^2)$
    $\rho$ = sea water density
    S = surface wetted area
    V = speed
    L = length between perpendiculars

**Fractional power increase ($\Delta P/P$) at constant speed for going from a smooth ($k_1$) to a rough ($k_2$) surface:**

$$1 + \Delta P/P = \frac{(1 + \Delta R/R)}{(1 + \Delta\eta/\eta)}$$

wherein
P = Shaft power
$\eta$ = Open water propeller efficiency
For Ro-Ro ships:

$$\frac{1}{(1 + \Delta\ \eta/\eta)} = 0.17(1 + \Delta R/R) + 0.83$$

For Tankers:

$$\frac{1}{(1 + \Delta\eta/\eta)} = 0.30(1 + \Delta R/R) + 0.70$$

**Claims**

1. A method for determining the costs associated with the application and use of a foul release or antifouling coating composition on the underwater section of a vessel by means of a computer system, which method comprises:

    a) loading or storing in a memory or a storage medium of the computer system a first set of data relating to the vessel type and fuel consumption of said vessel type;
    b) loading or storing in a memory or a storage medium of the computer system a second set of data relating to the cost of fuel, the days at sea of said vessel and the in-service period of said vessel;
    c) loading or storing in a memory or a storage medium of the computer system a third set of data relating to the costs of application of said foul release or antifouling coating composition to said underwater section of said vessel;
    d) calculating and storing in a memory or a storage medium of the computer system a forth set of data indicating the fuel costs for said vessel type during said in-service period, wherein for the calculation of these fuel costs additional fuel costs associated with an increase of roughness of said coating or fouling growth is not taken into account;
    e) calculating and storing in a memory or a storage medium of the computer a fifth set of data indicating the additional fuel costs for the increase of roughness of said foul release or antifouling coating during said in-service period;
    f) calculating and storing in a memory or a storage medium of the computer a sixth set of data indicating the additional fuel costs associated with the fouling growth during said in-service period;
    g) calculating and storing in a memory or a storage medium of the computer the total costs on basis of the third set of data, the forth set of data, the fifth set of data, and the sixth set of data.

2. A method for determining the difference in fuel consumption during the in-service period for one vessel associated with the use of different types of antifouling or foul release coating using a computer system, which method comprises following steps:

    a) loading or storing in a memory or a storage medium of the computer system a first set of data relating to the vessel type and fuel consumption of said vessel type;
    b) loading or storing in a memory or a storage medium of the computer system a second set of data relating to the cost of fuel, the days at sea of said vessel and the in-service period of said vessel;
    c) loading or calculating or storing in a memory or a storage medium of the computer system a third set of data relating the increase of surface roughness and fouling growth for one type of antifouling or foul release coating during the in-service period of said vessel;

d) loading or calculating or storing in a memory or a storage medium of the computer system a fourth set of data relating the increase of surface roughness and fouling growth for the other type of antifouling or foul release coating during the in-service period of said vessel;

e) calculating and storing in a memory or a storage medium of the computer system a fifth set of data indicating the total fuel consumption for said vessel type coated with one type of antifouling or foul release coating during said in-service period, thereby taking into account the additional fuel consumption associated with an increase of roughness of said one type of coating and fouling growth on said one type of coating;

f) calculating and storing in a memory or a storage medium of the computer system a sixth set of data indicating the total fuel consumption for said vessel type coated with the other type of antifouling or foul release coating during said in-service period, thereby taking into account the additional fuel consumption associated with an increase of roughness of said other type of coating and fouling growth on said other type of coating;

g) calculating and storing in a memory or a storage medium of the computer the difference in fuel consumption which equals the difference between said fifth and sixth set of data.

3. A method for determining the cost difference during the in-service period for one vessel associated with the use of two different types of antifouling or foul release coating, which method uses a computer system and comprises the following steps:

a) loading or storing in a memory or a storage medium of the computer system a first set of data relating to the vessel type and fuel consumption of said vessel type;

b) loading or storing in a memory or a storage medium of the computer system a second set of data relating to the cost of fuel, the days at sea of said vessel and the in-service period of said vessel;

c) loading or calculating or storing in a memory or a storage medium of the computer system a third set of data relating the increase of surface roughness and fouling growth for one type of antifouling or foul release coating during the in-service period of said vessel;

d) loading or storing in a memory or a storage medium of the computer system a fourth set of data relating to the cost of application of said one type of antifouling or foul release coating to the underwater section of said vessel;

e) loading or calculating or storing in a memory or a storage medium of the computer system a fifth set of data relating the increase of surface roughness and fouling growth for the other type of antifouling or foul release coating during the in-service period of said vessel;

f) loading or storing in a memory or a storage medium of the computer system a sixth set of data relating to the cost of application of said other type of antifouling or foul release coating to the underwater section of said vessel;

g) calculating and storing in a memory or a storage medium of the computer system a seventh set of data indicating the total fuel costs for said vessel type coated with one type of antifouling or foul release coating during said in-service period, thereby taking into account the additional fuel consumption associated with an increase of roughness of said one type of coating and fouling growth on said one type of coating;

h) calculating and storing in a memory or a storage medium of the computer system a eighth set of data indicating the total fuel costs for said vessel type coated with the other type of antifouling or foul release coating during said in-service period, thereby taking into account the additional fuel consumption associated with an increase of roughness of said other type of coating and fouling growth on said other type of coating;

i) calculating and storing in a memory or a storage medium of the computer a ninth set of data indicating the difference in fuel costs between said seventh and eighth set of data;

j) calculating and storing in a memory or a storage medium of the computer a tenth set of data indicating the difference in coating application costs between said fourth and sixth set of data;

k) calculating and storing in a memory or a storage medium of the computer the cost difference which equals the sum of the costs from said ninth and tenth set of data.

4. Method according to any of the preceeding claims wherein the Townsin formulae are used to calculate the effect of surface roughness on the fuel consumption of the vessel.

5. Method according to any of the preceeding claims wherein the fuel consumption is calculated based on a constant speed of the vessel.

6. Method according to any of the preceeding claims wherein $SO_x$, $NO_x$, and $CO_2$ emissions are also tak-

en into account.

**European Patent Office**

**DECLARATION**

Application Number

which under Rule 45 of the European Patent Convention EP 03 25 3455 shall be considered, for the purposes of subsequent proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 20 October 2003 | De Smet, M |

EPO FORM 1504 (P04C37)